# EUROPÄISCHE PATENTSCHRIFT

(11) **EP 2 906 390 B1**
(45) Veröffentlichungstag und Bekanntmachung des Hinweises auf die Patenterteilung: **11.03.2020**
(21) Anmeldenummer: 13777014.5
(22) Anmeldetag: 10.10.2013
(51) Int. Cl.: B24B 19/14, B24B 19/26, B24B 27/00

(54) **VERFAHREN ZUR AUTOMATISIERTEN FLÄCHENBEARBEITUNG EINES PROFILIERTEN GROSSBAUTEILS, EINER WINDENERGIEANLAGE, BEARBEITUNGSVORRICHTUNG UND BEARBEITUNGSSYSTEM**
METHOD FOR THE AUTOMATED SURFACE MACHINING OF A PROFILED LARGE COMPONENT OF A WIND ENERGY PLANT, MACHINING DEVICE AND MACHINING SYSTEM
PROCÉDÉ AUTOMATISÉ D'USINAGE DE SURFACE D'UN ÉLÉMENT PROFILÉ DE GRANDE DIMENSION, INSTALLATION ÉOLIENNE, DISPOSITIF D'USINAGE ET SYSTÈME D'USINAGE

(30) Priorität: 12.10.2012 DE 102012019989; 06.06.2013 DE 102013210582
(43) Veröffentlichungstag der Anmeldung: 19.08.2015
(73) Patentinhaber: Wobben Properties GmbH, 26607 Aurich (DE)
(72) Erfinder: HEILIG, Tobias, 26506 Norden (DE); JANßEN, Ingo, 26689 Augustfehn (DE); WOLF, Ernst-Jürgen, 39343 Hillersleben (DE)
(74) Vertreter: Eisenführ Speiser
(86) Internationale Anmeldenummer: PCT/EP2013/071213
(87) Internationale Veröffentlichungsnummer: WO 2014/057061

(56) Entgegenhaltungen:
- WO-A1-95/09714
- WO-A1-2008/077844
- DE-A1- 4 341 498
- US-A1- 2002 072 297

## Beschreibung

Die Erfindung betrifft ein Verfahren gemäß dem Oberbegriff des Anspruchs 1 zur automatisierten Flächenbearbeitung, insbesondere Schleifen, eines Profilbauteils in Form eines profilierten Großbauteils, insbesondere eines Rotorblattes, einer Windenergieanlage, sowie eine entsprechende Bearbeitungsvorrichtung und ein Bearbeitungssystem mit der Bearbeitungsvorrichtung

Grundsätzlich ist eine Vorrichtung und ein Verfahren zur automatisierten Flächenbearbeitung aus WO 2008/077844 A1 bekannt, wobei die Nachteile des in WO 2008/077844 A1 offenbarten Verfahrens sind:
- das Schleifportal verfährt auf Schienen und lässt sich somit nicht in andere Fertigungsstätten transportieren;
- da sich die Schleifköpfe nur in horizontaler Richtung verschieben lassen, kann nicht die gesamte Profilkontur geschliffen werden;
- bei einer Vergrößerung des Rotorblattes im Querschnitt oder auch der Länge muss das gesamte Portal angepasst werden.

Problematisch ist nämlich durchaus auch bei einem profilierten Großbauteil einer Windenergieanlage --wie beispielsweise bei einem Rotorblatt aber auch ggf. bei einem anderen Großbauteil der Windenergieanlage, wie eine Spinnerverkleidung, eine Nabe, eine Gondelverkleidung oder ein Turmsegment oder dergleichen-- die oftmals komplexe und je nach Anlagentyp durchaus variable Profilierung des Großbauteils. Das Profil eines Rotorblattes beispielsweise erweist sich als komplex und kann anlagenspezifisch durchaus Änderungen unterliegen, die dazu führen könnten, dass diese nicht in einer vergleichsweise unflexiblen Bearbeitungsvorrichtung der eingangs genannten Art bearbeitet werden können.

US 2002/072297 A1 beschreibt ein Verfahren gemäß dem Oberbegriff des Anspruchs 1 zur Oberflächenbearbeitung eines Profilbauteils mit einer Bearbeitungsvorrichtung aufweisend ein Bewegungsportal, ein Robotiksystem mit einem Steuersystem und einem Bearbeitungswerkzeug.

DE 4342498 A1 zeigt eine Schleifmaschine mit Schleifband und Spannern zum drehbaren Halten eines profilierten Großbauteils.

Aus WO 95 09714 A1 ist eine Schleifvorrichtung bekannt, die während und zwischen der Bearbeitung einer Oberfläche eines Werkstücks die Abnutzung des Bearbeitungswerkzeuges prüft.

Aufgabe der Erfindung ist es, ein Verfahren und eine Vorrichtung anzugeben, die hinsichtlich des Standes der Technik verbessert ist, wenigstens aber eines der oben beschriebenen Probleme adressiert. Zumindest soll eine alternative Lösung zu einer im Stand der Technik bekannten Lösung vorgeschlagen werden. Insbesondere ist es Aufgabe der Erfindung, eine Bearbeitung und/oder Bearbeitungsvorrichtung und Verfahren zur Verfügung zu stellen, das eine größere Flexibilität in der Behandlung und/oder Bearbeitung von profilierten Großbauteilen einer Windenergieanlage ermöglicht. Insbesondere ist es darüber hinaus Aufgabe der Erfindung, die Vorrichtung und das Verfahren für eine möglichst effiziente und bevorzugt dennoch exakte Behandlung und/Bearbeitung des Großbauteils auszulegen. Insbesondere ist es darüber hinaus Aufgabe der Erfindung, ein Verfahren und eine Vorrichtung anzugeben, mittels der eine automatisierte Flächenbearbeitung des Großbauteils vergleichsweise positionsgenau und/oder gleichmäßig mit einem Bearbeitungswerkzeug vornehmbar ist.

Die Aufgabe betreffend das Verfahren, wird durch die Erfindung mit einem Verfahren des Anspruchs 1 gelöst.

Die Aufgabe hinsichtlich der Vorrichtung wird durch die Erfindung mit einer Bearbeitungsvorrichtung des Anspruchs 12 gelöst.

Zur Behebung der eingangs genannten Nachteile sieht das Konzept der Erfindung vor, dass ein Schleifroboter auf einem Verfahrwagen montiert wird und so jede Position des Rotorblatts anfahren kann.

Die Erfindung hat erkannt, dass bei Nutzung eines frei bewegbaren Verfahrwagens eine effiziente und exakte Führung des Bearbeitungswerkzeugs möglich ist. Erfindungsgemäß wird mittels dem Steuersystem eine Fahrbewegung des Bewegungsportals und eine Zustellbewegung des Bearbeitungswerkzeugs mittels der Zustellrobotik nach Vorgabe eines Modells der Profilfläche des Profilbauteils ausgeführt.

Unter einer Fläche ist grundsätzlich jede ebene oder meist dreidimensional gekrümmte, insbesondere komplex gewölbte, Fläche gemäß einer Profilfläche, insbesondere Oberfläche, des Großbauteils zu verstehen, insbesondere eine komplex gewölbte Fläche wie die Oberfläche eines Rotorblattes zu verstehen. Insofern kann ein flächiger Behandlungszug im Grunde die Bearbeitung einer beliebig gekrümmten Fläche oder Linie im Raum umfassen.

Diese und andere vorteilhafte Weiterbildungen der Erfindung sind den Unteransprüchen zu entnehmen und geben im Einzelnen vorteilhafte Möglichkeiten an, das Konzept der Erfindung im Rahmen der Weiterbildungen und unter Angabe weiterer Vorteile zu realisieren.

Darüber hinaus hat sich insbesondere herausgestellt, dass --vor allem vor einem flächigen Behandeln des Großbauteils-- zu gewährleisten ist, dass sich über jedenfalls nicht unwesentliche Flächenanteile des Großbauteils erstreckende Bearbeitungszüge möglichst gleichmäßig ausgeführt werden. Hier tut sich eine Problematik auf, da einerseits das Verfahren des Bewegungsportals zur Gewährleistung einer höheren Flexibilität grundsätzlich frei von mechanischer Begrenzung ist und zum anderen aber das Zustellen und Führen des Bearbeitungswerkzeugs durchaus qualitätsbezogene und sichtbare Auswirkungen auf die Behandlungen und/oder Bearbeitung des profilierten Großbauteils hat; also gleichwohl möglichst genau und gleichmäßig erfolgen sollte.

Erfindingsgemäß ist eine Abnutzung des Bearbeitungswerkzeugs zwischen einem ersten und einem zweiten Bearbeitungszug prüfbar.

Eine Behandlung und/oder Bearbeitung kann beispielsweise eine Oberflächenbearbeitung, wie Schleifen, Finishen, Lackieren oder dgl. umfassen. Eine Behandlung und/oder Bearbeitung dieses Großbauteils, beispielsweise im Rahmen eines grundsätzlichen Herstellungsprozesses, kann auch in die Tiefe desselben, also unter die Oberfläche gehen. Dies kann beispielsweise eine das Großbauteil aufbauende Bearbeitung, wie Einlegen von Laminatschichten oder dgl. flächiges Schichtaufbauen des Großbauteils (Laminieren) umfassen.

Bevorzugt sollte die Führung des Bearbeitungswerkzeugs positionsgenau und/oder gleichmäßig über einen Großteil der Fläche des Großbauteils erfolgen. Bevorzugt kann für eine genaue Positionierung das Robotiksystem vor Einleitung eines Behandlungszuges an einer Festposition hinsichtlich seiner Position geeicht werden, insbesondere eine reale Position des Bearbeitungswerkzeuges in Bezug auf das Grossbauteil mit einer virtuellen Position des Bearbeitungswerkzeuges in Bezug auf das Modell abgeglichen werden. Darüber hinaus hat eine Weiterbildung erkannt, dass sobald ein Bearbeitungswerkzeug --zwischen einem beliebig (z. B. zeitlich, örtlich oder bearbeitungssystematisch oder dergleichen) festlegbaren ersten und zweiten Bearbeitungszug-- im Laufe einer länger andauernden großflächigen Behandlung einer Abnutzung oder Verschleiß oder dgl. unterliegt, dies direkten Einfluss auf die Qualität der Behandlung hat. Beispielsweise zeigt sich, dass bei einem Schleifvorgang die Abnutzung eines Schleifwerkzeugs (wie eine Schleifwalze oder ein Schleifplattenwerkzeug) der direkte Einfluss auf die Qualität der Bearbeitung über die sich ändernde Umfangsgeschwindigkeit an der Schleifoberfläche des Schleifwerkzeugs (bei abreibender Werkzeugmasse) hat.

Die Weiterbildung sieht vor, dass eine Anzahl flächiger Behandlungszüge am Großbauteil umgesetzt werden und eine Abnutzung des Bearbeitungswerkzeugs zwischen einem ersten und einem zweiten Bearbeitungszug geprüft wird.

Im Folgenden wird unter Bearbeitung im Prinzip jede materialabtragende Behandlung eines Bauteils als auch jede materialaufbringende Bearbeitung verstanden sowie auch eine lediglich eine Behandlungsmaßnahme als solche, die einen Materialbestand des Profilbauteils im Wesentlichen nicht ändert sondern ggfs. nur modifiziert. Außerdem kann unter Bearbeitung jede Art einer spanenden oder nicht-spanenden Bearbeitung zu verstehen sein.

Die Wahl eines Zeitpunkts einer Prüfung auf Abnutzung des Bearbeitungswerkzeugs zwischen einem ersten und einem zweiten Bearbeitungszug kann in unterschiedlicher Weise festgelegt werden. Beispielsweise kann vorgesehen sein, dass im Rahmen fester Zyklen, also beispielsweise nach jedem bearbeitungssystematisch festgelegten Bearbeitungszug (z. B. Beendigung einer Fahrrichtung an einem Umkehrpunkt) eine Prüfung des Bearbeitungswerkzeugs erfolgt, bevor der nächste Bearbeitungszug durchgeführt wird. Im Falle eines Schleifvorgangs kann beispielsweise ein Rotorblatt entlang seiner Längsachse geschliffen werden, wobei darüber ein Bearbeitungszug zwischen zwei Umkehrpunkten des Arbeitskopfes definiert wäre, welche beispielsweise an einer Blattwurzel und einer Blattspitze liegen können, aber auch kürzere beliebige Streckenendpunkte können einen Bearbeitungszug zwischen zwei Umkehrpunkten begrenzen. Jeder längs ausgeführte Schleifvorgang am Rotorblatt führte dann zu einer gleichbleibenden Qualität der Oberfläche im Rahmen des Schleifvorgangs.

Im Rahmen einer Variante kann der Zeitpunkt einer Prüfung auch fest vorgegeben werden, etwa nach Erfahrungswerten eines Schleifwegs oder einer Betriebszeit des Bearbeitungswerkzeugs, die für eine Prüfung desselben angemessen ist. Dies könnte bei zu groß angesetztem Schleifweg oder zu groß angesetzter Betriebszeit --und demzufolge einer vergleichsweise maßgeblichen Änderung des Werkzeugs durch Abrieb-- zu abnehmender Qualität der Behandlung führen. Zwar könnte dies jedoch durch eine Anpassung der Zyklen vermieden werden. Grundsätzlich kann ein solcher Prozess nämlich als lernfähig gestaltet werden, so dass sich im Laufe der Durchführung des Verfahrens Kennfelder erstellen lassen, die für ein bestimmtes Verhandlungswerkzeug und ein bestimmtes Großprofilbauteil, wie etwa ein Rotorblatt charakteristisch sind. Besonders vorteilhaft ist es jedoch dass, wie von der Erfindung vorgeschlagen, eine Abnutzung des Bearbeitungswerkzeugs zwischen einem ersten und einem zweiten Bearbeitungszug geprüft wird.

Bevorzugt wird die Abnutzung geprüft, aufweisend die Schritte:
- Zustellen des Bearbeitungswerkzeugs auf einen Referenzkörper, nach dem ersten und vor dem zweiten Bearbeitungszug
- Messen eines Druckes zwischen Bearbeitungswerkzeug und Referenzkörper und/oder
- Messen eines Abstandes zwischen Bearbeitungswerkzeug und Referenzkörper und/oder
- Messen eines sonstigen Referenzparameters zwischen Bearbeitungswerkzeug und Referenzkörper.

Vorteilhaft kann ein Referenzparameter zwischen Bearbeitungswerkzeug und einem Referenzkörper nach dem ersten und vor dem zweiten Bearbeitungszug bestimmt werden. Sollte nach Vergleich eines nach dem Referenzparameter ermittelten Abnutzparameters mit einem Abnutzschwellwert der letztere überschritten werden, kann ein Auswechseln des Bearbeitungswerkzeugs oder ein Nachführen des Bearbeitungswerkzeugs im Arbeitskopf erfolgen, insbesondere derart erfolgen, dass in dem zweiten Bearbeitungszug die Behandlungswerte des Referenzparameters dieselben sind, wie beim ersten Bearbeitungszug. So wird für alle Behandlungszüge bei der flächigen Behandlung des Großbauteils eine gleichmäßige Qualität der Oberfläche des Profils gewährleistet.

Insbesondere kann die Abnutzung weiter geprüft werden, aufweisend die Schritte:
- Feststellen eines Abnutzdrucks und/oder eines Abnutzabstandes oder sonstigen Abnutzparameters;
- Vergleichen des Abnutzdrucks mit einem Druckschwellwert und/oder des Abnutzabstandes mit einem Abstandsschwellwert und/oder des sonstigen Abnutzparameters mit einem Abnutzschwellwert.

Es hat sich weiter ein Auswechseln und/oder Reinigen des Bearbeitungswerkzeugs bei Überschreiten des Druckschwellwerts und/oder des Abstandsschwellwerts als vorteilhaft erwiesen, insbesondere in und/oder vor dem zweiten Bearbeitungszug.

Bevorzugt kann auch ein Nachführen eines Steuerparameters des Bearbeitungswerkzeugs anhand des Abnutzdrucks und/oder Abnutzabstandes und/oder des sonstigen Abnutzschwellwerts in dem zweiten Bearbeitungszug erfolgen.

Erfindingsgemäß wird nach einem virtuellen Modell der Profilfläche des Profilbauteils eine Kontur der Profilfläche im Steuersystem hinterlegt, entlang der das Bearbeitungswerkzeug geführt wird. Vorteilhaft hat sich im Rahmen einer Weiterbildung die Hinterlegung einer Kontur und/oder Profilfläche im Steuersystem nach Vorgabe eines virtuellen Modells der Profilfläche des Profilbauteils als vorteilhaft erwiesen. Dies hält einerseits aufwendige Rechenzeit gering für die Fahrbewegung. Andererseits kann diese in eine beispielsweise adaptive Regelung der Zustellbewegung investiert werden, die wiederum maßgeblich für die eigentliche Bearbeitungsqualität ist. Insbesondere führt dies zu einem vergleichsweise rechenzeiteffektiven Steuersystem.

Bevorzugt wird eine Kennung eines virtuellen Modells der Profilfläche des Profilbauteils und/oder einer daraus ermittelten Kontur im Steuersystem mit einem --insbesondere am Profilbauteil angebrachten, grundsätzlich jedoch auch anderorts am Arbeitsplatz oder dem Robotiksystem zugänglichen Ort vorgesehenen--, Identifikationsmerkmal abgeglichen. Das Identifikationsmerkmal kann auch die Funktion der oben genannten Festposition zur Positionseichung des Robotiksystems umfassen und kann, muss aber nicht, am Großbauteil angebracht sein. Insbesondere kann das flächige Behandeln des Großbauteils mit dem Bearbeitungswerkzeug nur erfolgen, wenn die Kennung dem Identifikationsmerkmal positiv zugeordnet werden kann. Eine positive Zuordnung stellt bevorzugt sicher, dass die Kontur und/oder das virtuelle Modell der Profilfläche des Profilbauteils im Steuersystem auf das Profilbauteil passt. Dazu kann ein Erkennungssensor an der Bearbeitungsvorrichtung, insbesondere dem Arbeitskopf, vorgesehen sein, um das Identifikationsmerkmal zu lesen. Das Identifikationsmerkmal kann bevorzugt als Barcode, Flächencode oder dergleichen einfaches Identifikationsmerkmal gebildet sein. Es kann auch ein komplexerer Datenaustausch im Rahmen eines Authentifizierungsprozesses als Abgleichprozess genutzt werden. Insbesondere kann auch ein im Identifikationsmerkmal ganz oder teilweise geladenes virtuelles Modell der Profilfläche des Profilbauteils und/oder Kontur der Profilfläche (z. B. ein Header derselben) im Rahmen des Abgleichs erst in das Steuersystem der Bearbeitungsvorrichtung geladen werden oder ganz oder teilweise ausgetauscht und zur Positiv-Zuordnung genutzt werden.

Besonders bevorzugt werden sachfremde Hindernisse, insbesondere Personenhindernisse, von der Bearbeitungsvorrichtung erkannt. Dies stellt sicher, dass eine grundsätzlich frei von mechanischer Begrenzung längs einer Profilfläche des Profilbauteils vorgesehene Fahrbewegung des Verfahrwagens und/oder eine Arbeitsbewegung der Zustellrobotik keine ungewollte Beschädigung an Hindernissen oder Personen ausführt. Insbesondere kann eine Erkennungssensorik ausgebildet sein, Hindernisse, insbesondere Personenhindernisse, in einem unmittelbaren Bewegungsbereich des Bewegungsportals und/oder des Robotiksystems zu erkennen.

Erfindungsgemäß umfasst eine Kontur entlang der das Bearbeitungswerkzeug geführt wird, ein Punktgitter; insbesondere mit längsseitig der Profilfläche angeordneten Punkten --die einer Trajektorie eines Bearbeitungszuges zugeordnet werden können-- und gegenüberliegenden Punkten --insbesondere Umkehrpunkten für den Arbeitskopf-- die für eine Begrenzung des Bearbeitungszugs des Bearbeitungswerkzeugs relevant sind.

Besonders bevorzugt ist das Großbauteil, insbesondere ein Rotorblatt, in einer mit der Bearbeitungsvorrichtung steuerverbundenen Dreheinrichtung eines Halteportals gehalten, wobei eine Kontur, entlang der das Bearbeitungswerkzeug geführt wird, ein Punktgitter umfasst mit umfänglich der Profilfläche zugeordneten Drehpunkten --insbesondere Umkehrpunkten für den Arbeitskopf-- auf die das Bearbeitungswerkzeug nach einer Drehung des Großbauteils und vor einem Bearbeitungszug gesetzt wird.

Besonders bevorzugt wird eine Fahrbewegung des Bewegungsportals und eine Zustellbewegung des Bearbeitungswerkzeugs ausgeführt unter Korrektur der Ausführung mittels eines Lernalgorithmus.

Besonders bevorzugt ist das Bearbeitungswerkzeug ein Schleifwerkzeug. Ein Reinigen des Bearbeitungswerkzeugs kann unter Einblasen von Druckluft erfolgen.

Insbesondere ist ein Steuerparameter des Bearbeitungswerkzeugs eine Umfangsgeschwindigkeit desselben, wobei eine Nachführung der Umfangsgeschwindigkeit derart erfolgt, dass diese im ersten und im zweiten Bearbeitungszug im Wesentlichen gleich ist.

Bevorzugt kann während eines Bearbeitungszuges ein Abstand und/oder ein Druck und/oder ein sonstiger Steuerparameter des Bearbeitungswerkzeugs, insbesondere zum profilierten Großbauteil geregelt, insbesondere konstant geregelt, werden.

Weitere Einzelheiten und Vorteile der Erfindung sind in den Ausführungsbeispielen gemäß der Zeichnung offenbart. Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1: eine bevorzugte Ausführungsform einer Schleifvorrichtung in der perspektivischen Draufsicht,
- Fig. 2: eine perspektivische Ansicht des Schleifkopfes der Schleifvorrichtung aus Fig. 1,
- Fig. 3: eine Seitenansicht des Schleifkopfes der Schleifvorrichtung aus Fig. 1, und
- Fig. 4: eine Unteransicht des Verfahrwagens der Schleifvorrichtung aus Fig. 1,
- Fig. 5: ein Ablaufschema für eine bevorzugte Ausführungsform eines Behandlungsverfahrens in Form eines Schleifverfahrens für ein Rotorblatt einer Windenergieanlage;
- Fig. 6: eine schematische Darstellung eines Bearbeitungssystems aus Bearbeitungsvorrichtung und Dreheinrichtung eines Halteportals für ein Rotorblatt einer Windenergieanlage zur Darstellung eines besonders bevorzugten Schleifvorgangs und unter schematischer Darstellung eines bevorzugten Steuerkonzepts für das Behandlungsverfahren.
- Fig. 7: ein Schema (A) und ein Ablaufdiagramm (B) für ein bevorzugtes Prüfverfahren zur Feststellung einer Abnutzung des Bearbeitungswerkzeugs zwischen einem ersten und einem zweiten Bearbeitungszug im Falle, dass das Bearbeitungswerkzeug als ein Schleifwerkzeug gebildet ist.

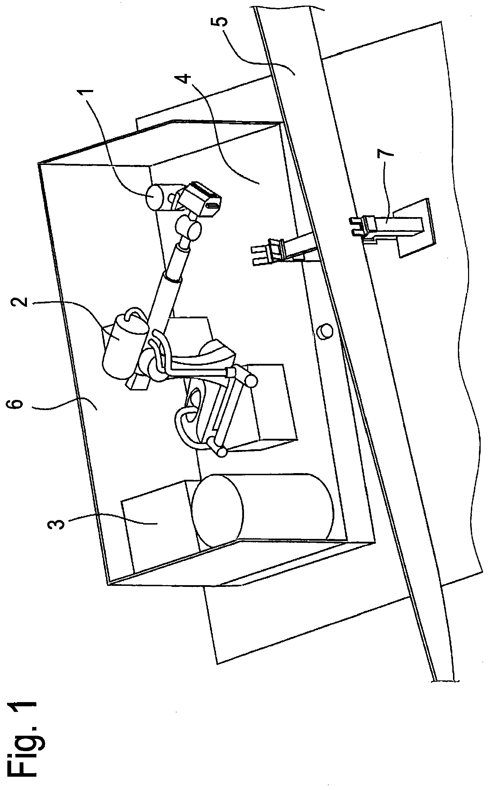

Die in Fig. 1 dargestellte Vorrichtung zum Schleifen von Rotorblättern für Windenergieanlagen besteht aus einem Schleifroboter 2, an dessen Arm ein Schleifköpf 1 angebracht ist. Sowohl der Schleifroboter 2 als auch der Absaugbehälter 3 ist auf einen Verfahrwagen 4 montiert. Die gesamte Vorrichtung ist aus arbeitssicherheitstechnischen Gründen mit einer Schutzabdeckung 6 umrandet, damit während des Betriebs kein Mitarbeiter den Wagen betritt. Der Verfahrwagen 4 lässt sich über eine Fernbedienung, die auch als Funkfernsteuerung ausgelegt sein kann, in jede beliebige Richtung lenken. Der Schleifkopf ist drehbar auf dem Kopf des Schleifroboters 23 angebracht.

### Grundsätzlicher Aufbau:

Das gesamte Bearbeitungssystem, vorliegend in Form einer Schleifanlage, umfasst praktisch drei Komponenten (i) der Roboter 2 inklusive Schleifkopf 1, der auf einem Verfahrwagen 4 angebracht ist, (ii) der Verfahrwagen 4 mit der Steuerung des Roboters 2 und der Absaugeinheit 21 für den Staub von der Schleifeinheit und die gesamte Leistungselektronik sowie (iii) eine Dreheinrichtung eines Halteportals, hier eine Blattstütze 7, für das Rotorblatt.

Grundsätzlich kann bei der Anlage der Roboter 2 durchaus auch teilweise schienengeführt sein; bevorzugt ist dieser jedoch frei fahrend ausgebildet. Der Verfahrwagen 4 kann mit einem Kabel an dem Steuerschrank oder einem Steuerschrank gekoppelt sein. Dieser Steuerschrank dient bevorzugt dazu, die Sicherheitseinrichtung zusammen zu führen und zu überwachen und entsprechend bei einer Gefahrensituation den Roboter 2 bzw. den Verfahrwagen 4 zum Stillstand zu bringen.

Bevorzugt wird dieser Steuerschrank direkt auf dem Verfahrwagen 4 angebracht. Auf dem Verfahrwagen ist ebenfalls eine Kompressor Einheit angebracht, die zur Steuerung der gesamten Mechanik für den Roboter 2 ausgebildet ist.

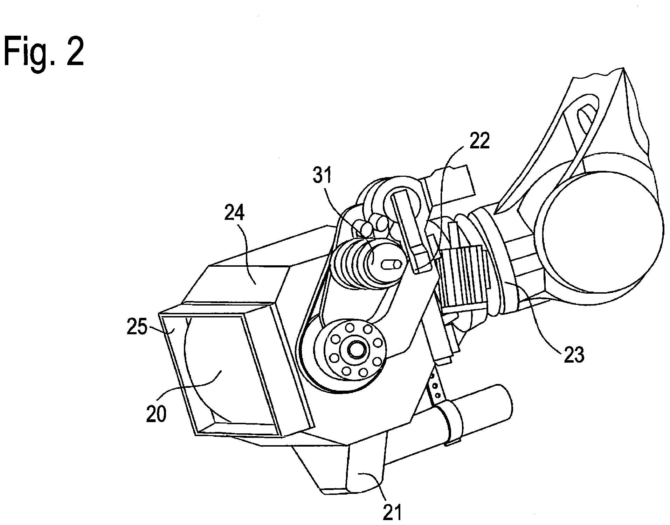

Fig. 2 zeigt den Schleifkopf 1 in perspektivischer Ansicht. Der Schleifkopf 1 ist drehbar am Roboterarmadapter 23 angebracht. Im Schleifkopf 1 ist die Schleifwalze mit dem Schleifmittel 20 untergebracht. Die Schleifwalze ragt aus dem Schleifwalzengehäuse 24 hervor. Im unteren Bereich des Schleifwalzengehäuses 24 ist die Absaugeinrichtung 21 angebracht. Die Absaugeinrichtung dient dazu den beim Schleifen entstandenen Staub in den Absaugbehälter 3 zu befördern. Hierzu ist die Absaugeinrichtung 21 mittels eines Schlauchs mit dem Absaugbehälter 3 verbunden.

### Zum Aufbau des hier als Schleifkopf ausgeführten Arbeitskopfes:

Das hier als Schleifwalze ausgeführte Bearbeitungswerkzeug ist beweglich innerhalb des Schleifkopfes 1 angebracht, so dass sie nach vorne bzw. nach hinten sich bewegen kann. Die Walze selber wird über ein Ventil und einen Hebelarm vor- und zurückgestellt werden. Der Anpressdruck soll hierbei konstant gehalten werden; dies wird vorliegend über eine adaptive Regelung umgesetzt. Der Anpressdruck kann über die Mechanik geregelt und entsprechend mit Proportionalventilen eingestellt werden. D. h., wenn der Anpressdruck zu stark wird --d. h. die Kontur hat sich in irgendeiner Form geändertsteigt auch der Druck in dem Proportionalventil und entsprechend wird der Schleifwalze zurückgefahren. Sind beispielsweise mehr als ein Abstandsschwellwert von 5cm vom Radius der Schleifwalze abgenutzt, so wird die Schleifwalze getauscht; für einen darunter liegenden Abnutzabstand könnte die Schleifwalze nachgestellt werden.

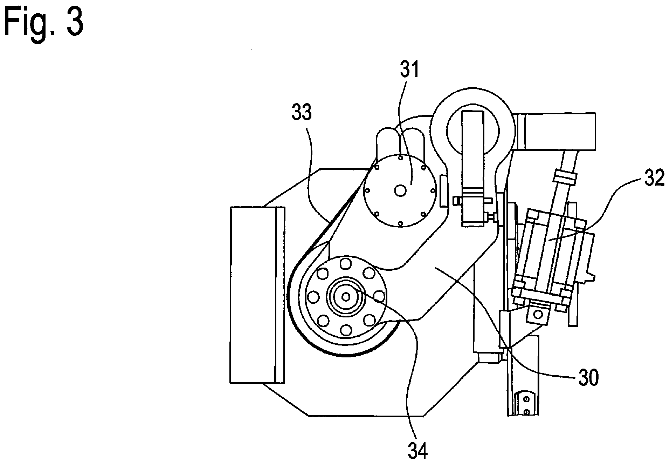

Fig. 3 zeigt den Schleifkopf 1 in der Seitenansicht. Die Schleifwalze wird mittels eines Motors 31 und eines Antriebriemens 33 angetrieben. Der Antriebsriemen kann auch alternativ als Kettenantrieb ausgeführt sein. Das Schleifwalzengehäuse 24 wird mittels eines Pneumatik Zylinders 32 bewegt. Der Pneumatik Zylinder ist über den Schleifkopfschwenkantrieb verbunden.

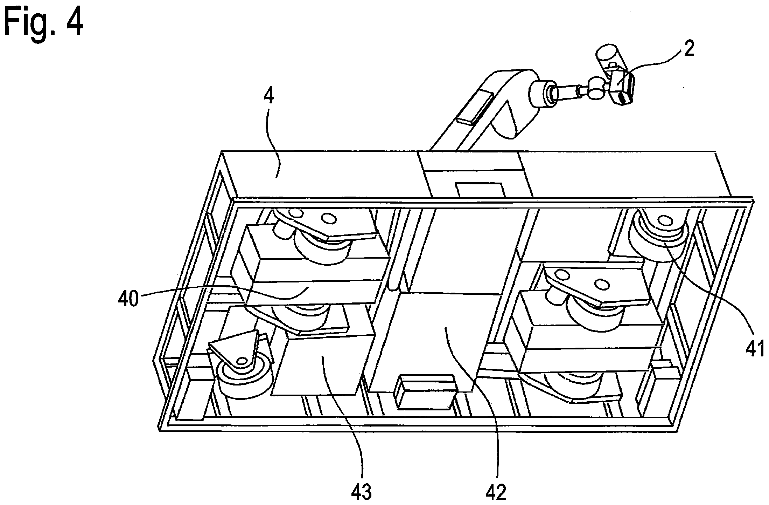

Fig. 4 zeigt den Verfahrwagen 4 in der Unteransicht. Der Verfahrwagen wird über den Antrieb 40 angetrieben. Gelenkt wird der Verfahrwagen über lenkbare Rollen 41. Der Antrieb, sowie die Steuerung werden über den Energiespeicher 42 gespeist.

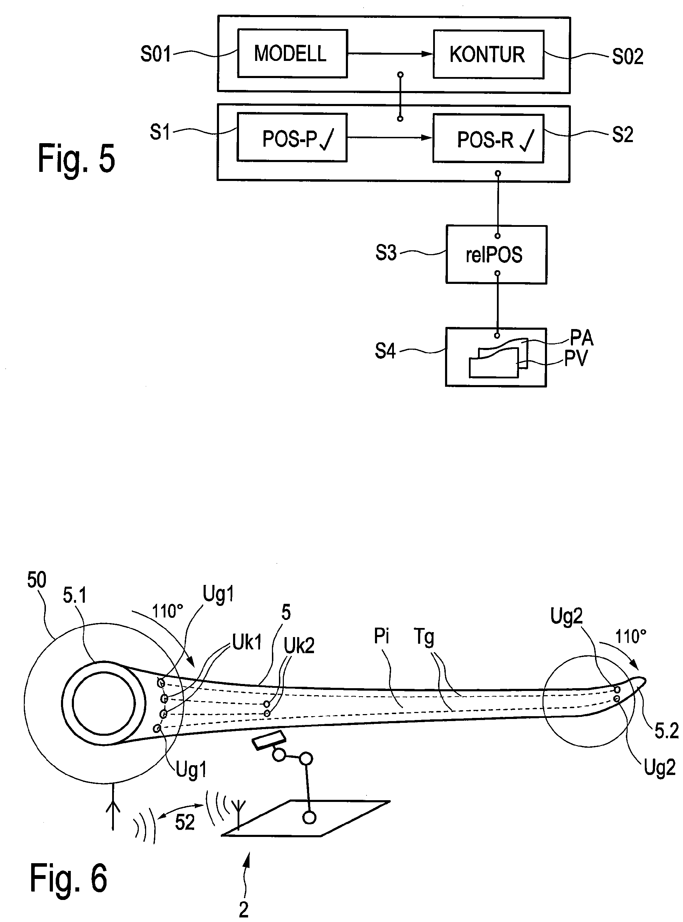

Fig. 5 zeigt den Ablauf eines Schleifverfahrens gemäß einer bevorzugten Ausführungsform:
In der Anfangsposition wird im Schritt S1 das Rotorblatt bei POS-P positioniert und im Schritt S2 wird der Schleifroboter bei POS-R positioniert. Der Schleifroboter ermittelt im Schritt S3 seine relative Position reIPOS vorliegend durch ein dreifaches Abtasten an dem Rotorblatt, also seine Position zu dem Rotorblatt.

Anhand dieser ermittelten Position reIPOS wird im Schritt S4 das Schleifprogramm abgefahren; und zwar ein erstes und zweites aufeinander abgestimmtes Schleifprogramm PV, PA für den Verfahrwagen 4 und eine Zustellroboti, hier den Roboterarm und den Schleifkopf. Die Kontur KONTUR ist bereits im Schritt S02 in dem Programm für den Schleifroboter hinterlegt. Es findet also in diesem Fall keine automatische Abtastung des Profils statt sondern die Position zum Anfahren und zum Schleifen sind in dem Programm nach Vorgabe eines Modells MODELL im Schritt S01 eingelernt worden. Die Oberfläche des Rotorblattes wird in einer Zickzackform entsprechend abgeschliffen. Nach jedem sinnvoll arbeitstechnisch aufgeteilten Schleifvorgang, hier als Bearbeitungszug bezeichnet, wird der Verschleiß von dem Schleifkopf ermittelt.

Fig. 6 zeigt schematisch eine Ausführungsform einer Aufteilung von Bearbeitungszügen.

Die Konturen KONTUR bzw. die Koordinaten der Konturen KONTUR sind in dem Roboterprogramm PA, PV hinterlegt. Die einzelnen Punkte Pi dieser Kontur KONTUR werden aus dem Computermodell MODELL des Rotorblattes abgeleitet; bevorzugt automatisch, ggfs. auch manuell. Sollte ein neues Rotorblatt angelernt werden, so wird das Computermodell und darauf aufbauend die Kontur KONTUR entsprechend angepasst. Eine automatische Anpassung von Computermodell MODELL und Roboterprogramm KONTUR des Roboters ist zwar grundsätzlich möglich, aber je nach Komplexität auch manuell mit einem gesonderten Auslegungsverfahren möglich.

### Positionierung des Roboters zum Rotorblatt:

Das Rotorblatt 5 ist in einer bevorzugt 110°-Dreheinrichtung 50 eines Halteportals eingespannt, damit es von jeder Seite angefahren werden kann. Grundsätzlich kann eine Dreheinrichtung 50 vorgesehen sein, die ausgebildet ist, das Rotorblatt um seine Achse um einen Drehwinkel bis zu einem bestimmten Wert zu drehen. Der Drehwinkel-Bereich kann grundsätzlich beliebig und geeignet in Bezug auf eine Roboterreichweite gewählt werden. Der Drehwinkel-Bereich umfasst vorteilhaft Drehwinkel wenigstens bis zu und/oder oberhalb von 90°, besonders bevorzugt bis zu 110° (gemäß der obengenannten bevorzugten 110°-Drehvorrichtung), vorteilhaft auch bis zu 180°. Je nach Bearbeitungsstand kann für eine bestimmte Position des Rotorblatts ein geeigneter Drehwinkel gewählt werden und anschliessend für eine andere Position variiert werden. Während des Schleifens bleibt das Rotorblatt 5 konstant in einer Position erhalten. Der Schleifroboter 2, d. h. der Verfahrwagen unter Anpressen des Schleifkopfes 1, fährt von der Blattwurzel 5.1 bis zur Blattspitze 5.2 und schleift eine Seite bzw. eine Kontur des Rotorblattes ab. Dazu sind nahe der Blattwurzel 5.1 und Blattspitze 5.2 liegende Umkehrpunkte Ug1, Ug2 für längere Trajektorien Tg aber auch dazwischenliegende Umkehrpunkte Uk1, Uk2 für kürzere Trajektorien Tk möglich und je nach Geometrie eines Profils sinnvoll. Ist der Roboter am Ende eines Bearbeitungszuges, d.h. des Rotorblattes an Umkehrpunkten Ug1, Ug2 oder dazwischen an dazwischenliegenden Umkehrpunkten Uk1, Uk2 angekommen, fährt dieser zurück und gibt ein Signal, dass das Rotorblatt 5 um eine bestimmte Position weitergedreht werden kann von der Dreheinrichtung 50. Dieses kann sowohl manuell aber bevorzugt automatisch umgesetzt werden; dazu ist ein Kommunikationskanal 52 zwischen Roboter 2 und 110°-Dreheinrichtung eines Halteportals entsprechend eingebracht. Teilt der Roboter 2, dass er mit einem Bearbeitungszug fertig ist, wird das Rotorblatt 5 in eine andere Position gedreht und fährt dann entsprechend wieder an dieser Trajektorie Tg, Tk der Kontur automatisch lang.

### Die Koordinatensysteme:

Das Rotorblatt 5 hat ein festes Koordinatensystem ebenso wie der Roboter 2 an POS-P bzw. POS-R. Durch eine Ermittlung der Position reIPOS des Rotorblattes 5 zum Roboter 2 wird die Differenz von diesen beiden Koordinatensystem ermittelt. Nachdem der Roboter 2 somit weiß wo in welcher Position reIPOS er zu dem Rotorblatt 5 steht, fährt er die einzelnen Konturpunkte ab und schleift somit das Rotorblatt 5. Eine genaue Ausrichtung von Rotorblatt 5 zum Schleifroboter 2 ist insoweit sinnvoll, wobei der Schleifroboter 2 beweglich ist und somit der Schleifroboter 2 zum Rotorblatt 5 ausgerichtet wird. Der Abstand vom Schleifroboter zum Rotorblatt kann variieren muss aber nicht variieren; eine Nahanpassung eines Anpressdruckes oder der Ausgleich kleinerer Hindernisse kann durch die oben erwähnte adaptive Regelung und gemäß dem Programm PA vorgenommen werden.

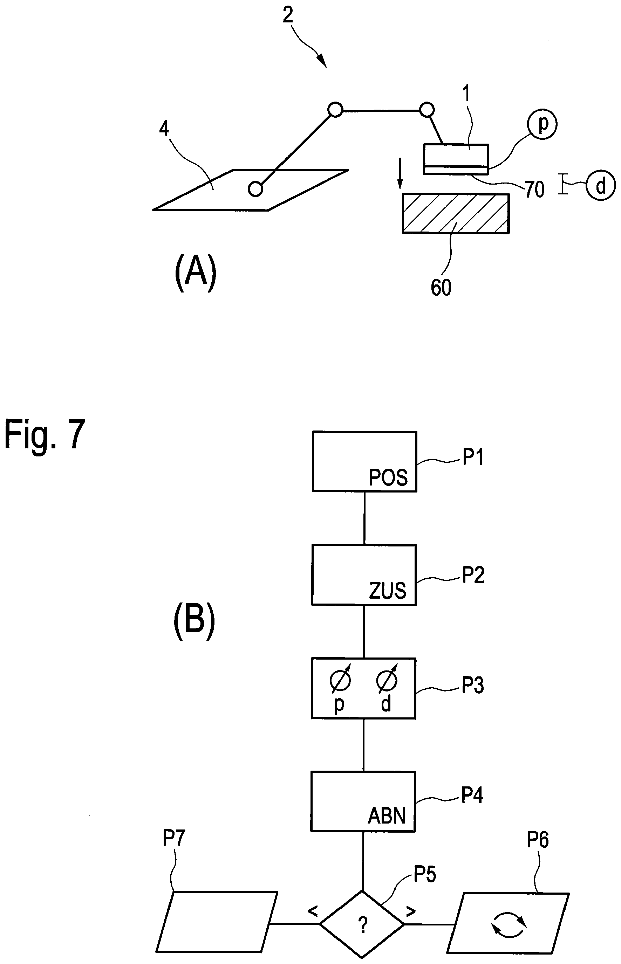

Fig. 7 zeigt in (A) ein Schema eines Prüfstandes zur Ermittlung eines Verschleißes eines Bearbeitungskopfes und in (B) ein Flussdiagramm zur Durchführung einer Prüfung auf eine Abnutzung des Bearbeitungswerkzeugs zwischen einem ersten und einem zweiten Behandlungszug. Dazu befindet sich der Arbeitskopf im ersten Schritt P1 auf einer Position POS.

Für die Ermittlung des Verschleißes des Schleifkopfes 1 fährt der Roboter 2 im Schritt P2 den Schleifkopf 1 auf einen Referenzkörper 60, hier eine Platte. Anhand des integrierten Messsystems 70 in einem Druckzylinder des Roboters 2, bevorzugt am Arbeitskopf oder - -wie hier-- direkt am Bearbeitungswerkzeug wird der Verschleiß ermittelt. Der Schleifkopf 1 wird langsam an die Platte angedrückt und --anhand des Druckes p und des Weges d mittels des Messsystems bestimmt im Schritt P3-- es wird im Schritt P4 geprüft, wie viel Verschleiß ABN an der Walze selber aufgetreten ist. Wird im Schritt P5 festgestellt, dass ein Abnutzabstand d von mehr als ein Abstandsschwellwert von 5cm vom Radius der Schleifwalze abgenutzt ist, so sollte die Schleifwalze im Schritt P6 getauscht werden.

Die Häufigkeit des Überprüfens auf Verschleiß ist variabel. Es ist denkbar ein zeitgesteuertes manuelles Überprüfen und nach Häufigkeit der Konturabfahren bzw. Bearbeitungszüge nach der Überprüfung. Dies kann auch abhängen von der Häufigkeit von Nachstellmöglichkeiten im Schritt P7 solange ein Abnutzabstand d von weniger als ein Abstandsschwellwert von 5cm besteht.

Das Schleifmittel kann ein handelsübliches Schleifmittel ebenso wie der Druckzylinder sein.

Es ist ebenfalls eine Vorrichtung zum Reinigen des Schleifkopfes vorgesehen, indem Druckluft in den Schleifraum geblasen wird, um evtl. Staub von der Schleifwalze zu entfernen. Das Reinigen kann manuell erfolgen, bevorzugt wird das Reinigen allerdings auch zeit- oder anhand der Schleifvorgänge gesteuert werden.

Es zeigt sich, dass das Konzept in vorteilhafter Weise ausgebildet ist, für ein sauberes Schleifbild, die Umfangsgeschwindigkeit der Schleifwalze indirekt zu berücksichtigen. Diese sollte möglichst für alle Bearbeitungszüge konstant, z. B. bei einem drei- oder vierstelligen U/min-Wert gehalten werden. Da sich der Umfang des Schleifmittels mit zunehmender Dauer des Schleifvorgangs ändert, ist bevorzugt vorgesehen entsprechend die Umfangsgeschwindigkeit anzupassen oder aber das Schleifmittel oder dergleichen Bearbeitungswerkzeug zu wechseln oder nachzustellen. Die Anpassung der Umfangsgeschwindigkeit erfolgt bevorzugt jedes Mal nach einer Verschleißmessung des Schleifkopfes wie sie in Fig. 7 (A, B) dargestellt ist.

## Patentansprüche

1. Verfahren zur automatisierten Flächenbearbeitung eines Profilbauteils in Form eines profilierten Großbauteils einer Windenergieanlage, mit einer Bearbeitungsvorrichtung aufweisend ein Bewegungsportal, ein Robotiksystem mit einem Steuersystem und einem Bearbeitungswerkzeug eines Arbeitskopfes aufweisend die Schritte:
- Verfahren des Bewegungsportals als ein Verfahrwagen (4) längs einer Profilfläche des Profilbauteils
- Zustellen des Bearbeitungswerkzeugs im Wesentlichen quer zur Profilfläche des Profilbauteils mittels einer zwischen Verfahrwagen (4) und dem Bearbeitungswerkzeug aktuierbaren Zustellrobotik
- flächiges Behandeln des Großbauteils mit dem Bearbeitungswerkzeug, wobei mittels dem Steuersystem eine Fahrbewegung des Bewegungsportals und eine Zustellbewegung des Bearbeitungswerkzeugs mittels der Zustellrobotik nach Vorgabe eines virtuellen Modells (MODELL) der Profilfläche des Profilbauteils ausgeführt wird, wobei wenigstens eine Kontur (KONTUR) der Profilfläche im Steuersystem hinterlegt wird, die nach einem virtuellen Modell (MODELL) der Profilfläche des Profilbauteils gebildet ist und die Kontur (KONTUR) vom Steuersystem ermittelt wird und das Bearbeitungswerkzeug entlang der Kontur (KONTUR) geführt wird,
- Umsetzen einer Anzahl flächiger Behandlungszüge am Großbauteil,
**dadurch gekennzeichnet, dass**
eine mit der Bearbeitungsvorrichtung steuerverbundenen Dreheinrichtung eines Halteportals zum drehbaren Halten des profilierten Großbauteils einer Windenergieanlage angeordnet ist, mit der
- das Verfahren des Bewegungsportals als ein Verfahrwagen frei von mechanischer Begrenzung längs einer Profilfläche des Profilbauteils erfolgt;
- zum Umsetzen der Anzahl flächiger Behandlungszüge am Großbauteil die Kontur (KONTUR) entlang der das Bearbeitungswerkzeug geführt wird, ein Punktgitter umfasst mit längsseitig der Profilfläche zugeordneten und gegenüberliegenden Umkehrpunkten (Ug1, Ug2, Uk1, Uk2) für einen Bearbeitungszug des Bearbeitungswerkzeugs, wobei
- eine Abnutzung des Bearbeitungswerkzeugs zwischen einem ersten und einem zweiten Bearbeitungszug geprüft wird.

2. Verfahren nach Anspruch 1,
**dadurch gekennzeichnet, dass**
die Abnutzung geprüft wird, aufweisend die Schritte:
- Zustellen des Bearbeitungswerkzeugs auf einen Referenzkörper, nach dem ersten und vor dem zweiten Bearbeitungszug
- Messen eines Druckes zwischen Bearbeitungswerkzeug und Referenzkörper und/oder
- Messen eines Abstandes zwischen Bearbeitungswerkzeug und Referenzkörper und/oder
- Messen eines sonstigen Referenzparameters zwischen Bearbeitungswerkzeug und Referenzkörper.

3. Verfahren nach Anspruch 1 oder 2,
**dadurch gekennzeichnet, dass**
die Abnutzung geprüft wird, aufweisend die Schritte:
- Feststellen eines Abnutzdrucks und/oder eines Abnutzabstandes oder sonstigen Abnutzparameters;
- Vergleichen des Abnutzdrucks mit einem Druckschwellwert und/oder des Abnutzabstandes mit einem Abstandsschwellwert und/oder des sonstigen Abnutzparameters mit einem Abnutzschwellwert.

4. Verfahren nach einem der vorhergehenden Ansprüche,
**gekennzeichnet durch**
- Auswechseln und/oder Reinigen des Bearbeitungswerkzeugs bei Überschreiten des Druckschwellwerts und/oder des Abstandsschwellwerts, und/oder
- Nachführen eines Steuerparameters des Bearbeitungswerkzeugs anhand des Abnutzdrucks und/oder Abnutzabstandes und/oder des sonstigen Abnutzschwellwerts in dem zweiten Bearbeitungszug.

5. Verfahren nach einem der vorhergehenden Ansprüche,
**dadurch gekennzeichnet, dass**
eine Kennung eines virtuellen Modells (MODELL) der Profilfläche des Profilbauteils und/oder einer daraus ermittelten Kontur (KONTUR) im Steuersystem mit einem Identifikationsmerkmal abgeglichen wird, wobei das flächige Behandeln des Großbauteils mit dem Bearbeitungswerkzeug nur erfolgt, wenn die Kennung dem Identifikationsmerkmal positiv zugeordnet werden kann.

6. Verfahren nach Anspruch 5,
**dadurch gekennzeichnet, dass**
das Identifikationsmerkmal am Profilbauteil und/oder Arbeitsplatz angebracht ist und sichergestellt wird, dass die Kontur und/oder das virtuelle Modell (MODELL) der Profilfläche des Profilbauteils im Steuersystem auf das Profilbauteil passt.

7. Verfahren nach einem der vorhergehenden Ansprüche,
**dadurch gekennzeichnet, dass**
sachfremde Hindernisse von der Bearbeitungsvorrichtung erkannt werden und eine Erkennungssensorik ausgebildet ist, Hindernisse in einem unmittelbaren Bewegungsbereich des Bewegungsportals und/oder Robotiksystems zu erkennen.

8. Verfahren nach einem der vorhergehenden Ansprüche,
**dadurch gekennzeichnet, dass**
das Großbauteil in derer mit der Bearbeitungsvorrichtung steuerverbundenen Dreheinrichtung des Halteportals gehalten ist, wobei eine Kontur (KONTUR) entlang der das Bearbeitungswerkzeug geführt wird ein Punktgitter umfasst mit umfänglich der Profilfläche zugeordneten Drehpunkten auf die das Bearbeitungswerkzeug nach einer Drehung des Großbauteils und vor einem Bearbeitungszug gesetzt wird.

9. Verfahren nach einem der vorhergehenden Ansprüche,
**dadurch gekennzeichnet, dass**
eine Fahrbewegung des Bewegungsportals und/oder eine Zustellbewegung des Bearbeitungswerkzeugs ausgeführt wird unter Korrektur der Ausführung eines Lernalgorithmus.

10. Verfahren nach einem der vorhergehenden Ansprüche,
**dadurch gekennzeichnet, dass**
ein Steuerparameter des Bearbeitungswerkzeugs eine Umfangsgeschwindigkeit desselben ist, wobei eine Nachführung der Umfangsgeschwindigkeit derart erfolgt, dass diese im ersten und im zweiten Bearbeitungszug im Wesentlichen gleich ist.

11. Verfahren nach einem der vorhergehenden Ansprüche,
**dadurch gekennzeichnet, dass**
während eines Bearbeitungszuges ein Abstand und/oder ein Druck und/oder ein sonstiger Steuerparameter des Bearbeitungswerkzeugs zum profilierten Großbauteil geregelt wird.

12. Bearbeitungsvorrichtung zur automatisierten Flächenbearbeitung eines profilierten Großbauteils einer Windenergieanlage, mit einem Bewegungsportal, einem Robotiksystem mit einem Steuersystem und einem Bearbeitungswerkzeug eines Arbeitskopfes, wobei
- das Bewegungsportal als ein Verfahrwagen (4) gebildet ist, der längs einer Profilfläche des Profilbauteils verfahrbar ist;
- das Robotiksystem eine zwischen Verfahrwagen (4) und dem Bearbeitungswerkzeug aktuierbare Zustellrobotik umfasst, mittels der das Bearbeitungswerkzeug im Wesentlichen quer zur Profilfläche des Profilbauteils zustellbar ist, und
- das Bearbeitungswerkzeug zur flächigen Behandlung des Großbauteils ausgebildet ist, wobei
- das Steuersystem ausgebildet ist, eine Fahrbewegung des Verfahrwagens (4) und eine Zustellbewegung der Zustellrobotik nach Vorgabe eines virtuellen Modells (MODELL) der Profilfläche des Profilbauteils auszuführen, wobei wenigstens eine Kontur (KONTUR) der Profilfläche im Steuersystem hinterlegt ist, die nach einem virtuellen Modell (MODELL) der Profilfläche des Profilbauteils gebildet ist und die Kontur (KONTUR) vom Steuersystem ermittelbar ist und das Bearbeitungswerkzeug entlang der Kontur (KONTUR) führbar ist, wobei
- eine Anzahl flächiger Behandlungszüge am Großbauteil umsetzbar ist, und
**gekennzeichnet durch**
- eine mit der Bearbeitungsvorrichtung steuerverbundene Dreheinrichtung eines Halteportals zum drehbaren Halten des profilierten Großbauteils einer Windenergieanlage, wobei
- der Verfahrwagen (4) in einem Arbeitsbereich frei von mechanischer Begrenzung längs der Profilfläche des Profilbauteils verfahrbar ist,
- die Kontur (KONTUR) entlang der das Bearbeitungswerkzeug führbar ist, ein Punktgitter umfasst mit längsseitig der Profilfläche zugeordneten und gegenüberliegenden Umkehrpunkten für einen Bearbeitungszug des Bearbeitungswerkzeugs, und
- eine Abnutzung des Bearbeitungswerkzeugs zwischen einem ersten und einem zweiten Bearbeitungszug prüfbar ist.

## Claims

1. Method for automated surface processing of a profile component in the form of a profiled large component of a wind turbine, having a processing device having a movement portal, a robotic system having a control system and a processing tool of a working head having the steps of:
- moving the movement portal as a carriage (4) along a profile face of the profile component,
- positioning the processing tool substantially transversely relative to the profile face of the profile component by means of a positioning robot which can be actuated between a carriage (4) and the processing tool,
- surface processing of the large component with the processing tool, wherein by means of the control system a travel movement of the movement portal and a positioning movement of the processing tool are carried out by means of the positioning robot in accordance with the provisions of a virtual model (MODELL) of the profile face of the profile component, wherein at least one contour (KONTUR) of the profile face is stored in the control system which is formed in accordance with a virtual model (MODELL) of the profile face of the profile component and the contour (KONTUR) is established by the control system and the processing tool is guided along the contour (KONTUR),
- implementing a number of surface processing passes on the large component,
**characterised in that**
there is arranged a rotation device of a retention portal which is connected in terms of control to the processing device for rotatably retaining the profiled large component of a wind turbine, by means of which
- the displacement of the movement portal is carried out as a carriage free from mechanical limitation along a profile face of the profile component;
- in order to implement the number of surface processing passes on the large component, the contour (KONTUR) along which the processing tool is guided comprises a point grid with opposing reversal points (Ug1, Ug2, Uk1, Uk2) which are associated at the longitudinal side with the profile face for a processing pass of the processing tool, wherein
- a wear of the processing tool is monitored between a first and a second processing pass.

2. Method according to claim 1,
**characterised in that**
the wear is monitored, having the steps of:
- positioning the processing tool on a reference member, after the first and before the second processing pass,
- measuring a pressure between the processing tool and reference member and/or
- measuring a spacing between the processing tool and reference member and/or
- measuring another reference parameter between the processing tool and reference member.

3. Method according to claim 1 or claim 2,
**characterised in that**
the wear is monitored, having the steps of:
- determining a wear pressure and/or a wear spacing or other wear parameter;
- comparing the wear pressure with a pressure threshold value and/or the wear spacing with a spacing threshold value and/or the other wear parameter with a wear threshold value.

4. Method according to any one of the preceding claims,
**characterised by**
- changing and/or cleaning the processing tool when the pressure threshold value and/or the spacing threshold value has been exceeded and/or
- tracking a control parameter of the processing tool using the wear pressure and/or wear spacing and/or other wear threshold value in the second processing pass.

5. Method according to any one of the preceding claims,
**characterised in that**
an identifier of a virtual model (MODELL) of the profile face of the profile component and/or a contour (KONTUR) which is established therefrom is balanced in the control system with an identification feature, wherein the surface processing of the large component with the processing tool is carried out only when the identifier can be positively associated with the identification feature.

6. Method according to claim 5,
**characterised in that**
the identification feature is fitted to the profile component and/or workplace and it is ensured that the contour and/or the virtual model (MODELL) of the profile face of the profile component in the control system fits the profile component.

7. Method according to any one of the preceding claims,
**characterised in that**
irrelevant impediments are identified by the processing device and an identification sensor is constructed to identify impediments in a direct movement region of the movement portal and/or robot system.

8. Method according to any one of the preceding claims,
**characterised in that**
the large component is retained in the rotation direction of the retention portal which is connected in terms of control to the processing device, wherein a contour (KONTUR) along which the processing tool is guided comprises a point grid with rotation points which are associated peripherally with the profile face and on which the processing tool is placed after a rotation of the large component and before a processing pass.

9. Method according to any one of the preceding claims,
**characterised in that**
a travel movement of the movement portal and/or a positioning movement of the processing tool is carried out with correction of the implementation of a learning algorithm.

10. Method according to any one of the preceding claims,
**characterised in that**
a control parameter of the processing tool is a peripheral speed thereof, wherein a tracking of the peripheral speed is carried out in such a manner that it is substantially equal in the first and second processing passes.

11. Method according to any one of the preceding claims,
**characterised in that**,
during a processing pass, a spacing and/or a pressure and/or another control parameter of the processing tool with respect to the profiled large component is controlled.

12. Processing device for automated surface processing of a profiled large component of a wind turbine, having a movement portal, a robot system with a control system and a processing tool of a working head, wherein
- the movement portal is formed as a carriage (4) which can be moved along a profile face of the profile component;
- the robot system comprises a positioning robot which can be actuated between the carriage (4) and the processing tool and by means of which the processing tool can be positioned substantially transversely relative to the profile face of the profile component,
- the processing tool is constructed for surface processing of the large component, wherein
- the control system is constructed to carry out a travel movement of the carriage (4) and a positioning movement of the positioning robot in accordance with the provisions of a virtual model (MODELL) of the profile face of the profile component, wherein at least one contour (KONTUR) of the profile face is stored in the control system which is formed in accordance with a virtual model (MODELL) of the profile face of the profile component and the contour (KONTUR) can be established by the control system and the processing tool can be guided along the contour (KONTUR), wherein
- a number of surface processing passes can be implemented on the large component, and
**characterised by**
a rotation device of a retention portal which is connected in terms of control to the processing device in order to rotatably retain the profiled large component of a wind turbine, wherein
- the carriage (4) can be moved in an operating region free from mechanical limitation along the profile face of the profile component,
- the contour (KONTUR) along which the processing tool can be guided comprises a point grid with opposing reversal points which are associated at the longitudinal side with the profile face for a processing pass of the processing tool, and
- a wear of the processing tool can be verified between a first and a second processing pass.

## Revendications

1. Procédé d'usinage de surface automatisé d'un composant profilé sous la forme d'un composant de grande taille profilé d'une éolienne, avec un dispositif d'usinage présentant un portique de déplacement, un système robotisé avec un système de commande et un outil d'usinage d'une tête de travail, présentant les étapes :
- de déplacement du portique de déplacement en tant qu'un chariot de déplacement (4) le long d'une surface profilée du composant profilé,
- de positionnement de l'outil d'usinage sensiblement de manière transversale par rapport à la surface profilée du composant profilé au moyen d'un système de positionnement robotisé pouvant être actionné entre le chariot de déplacement (4) et l'outil d'usinage,
- de traitement à plat du composant de grande taille avec l'outil d'usinage, dans lequel un mouvement d'avance du portique de déplacement et un mouvement de positionnement d'un outil d'usinage au moyen du système de positionnement robotisé sont exécutés au moyen du système de commande selon la spécification d'un modèle virtuel (MODELE) de la surface profilée du composant profilé, dans lequel au moins un contour (CONTOUR) de la surface profilée est enregistré dans le système de commande, qui est formé selon un modèle (MODELE) virtuel de la surface profilée du composant profilé et le contour (CONTOUR) est déterminé par le système de commande et l'outil d'usinage est guidé le long du contour (CONTOUR),
- de mise en œuvre d'un certain nombre de trains de traitement à plat au niveau du composant de grande taille,
**caractérisé en ce que**
un système de rotation, relié de manière commandée au dispositif d'usinage, d'un portique de maintien servant à maintenir de manière à pouvoir tourner le composant de grande taille profilé d'une éolienne est agencé, avec lequel
- le déplacement du portique de déplacement en tant qu'un chariot de déplacement est effectué sans limitation mécanique le long d'une surface profilée du composant profilé ;
- pour mettre en œuvre le nombre de trains de traitement à plat au niveau du composant de grande taille, le contour (CONTOUR), le long duquel l'outil d'usinage est guidé, comprend un réseau de points avec des points d'inversion (Ug1, Ug2, Uk1, Uk2) associés côté longitudinal à la surface profilée et se faisant face pour un train d'usinage de l'outil d'usinage, dans lequel
- une usure de l'outil d'usinage entre un premier et un deuxième train d'usinage est vérifiée.

2. Procédé selon la revendication 1,
**caractérisé en ce que**
l'usure est vérifiée, présentant les étapes :
- de positionnement de l'outil d'usinage sur un corps de référence après le premier et avant le deuxième train d'usinage,
- de mesure d'une pression entre l'outil d'usinage et le corps de référence et/ou
- de mesure d'une distance entre l'outil d'usinage et le corps de référence, et/ou
- de mesure d'un autre paramètre de référence entre l'outil d'usinage et le corps de référence.

3. Procédé selon la revendication 1 ou 2,
**caractérisé en ce que**
l'usure est vérifiée, présente les étapes :
- de relevé d'une pression d'usure et/ou d'une distance d'usure ou d'un autre paramètre d'usure ;
- de comparaison de la pression d'usure à une valeur de seuil de pression et/ou de la distance d'usure à une valeur de seuil de distance et/ou de l'autre paramètre d'usure à une valeur de seuil d'usure.

4. Procédé selon l'une quelconque des revendications précédentes,
**caractérisé par**
- le remplacement et/ou le nettoyage de l'outil d'usinage en cas de dépassement de la valeur de seuil de pression et/ou de la valeur de seuil de distance, et/ou
- de suivi d'un paramètre de commande pour l'outil d'usinage à l'aide de la pression d'usure et/ou d'une distance d'usure et/ou de l'autre valeur de seuil d'usure dans le deuxième train d'usinage.

5. Procédé selon l'une quelconque des revendications précédentes,
**caractérisé en ce que**
un identifiant d'un modèle (MODELE) virtuel de la surface profilée du composant profilé et/ou d'un contour (CONTOUR) déterminé sur cette base est mis en regard dans le système de commande avec une caractéristique d'identification, dans lequel le traitement à plat du composant de grande taille avec l'outil d'usinage est effectué seulement quand l'identifiant peut être attribué à la caractéristique d'identification de manière positive.

6. Procédé selon la revendication 5,
**caractérisé en ce que**
la caractéristique d'identification est installée au niveau du composant profilé et/ou du poste de travail et il est assuré que le contour et/ou le modèle (MODELE) virtuel de la surface profilée du composant profilé s'adaptent dans le système de commande au composant profilé.

7. Procédé selon l'une quelconque des revendications précédentes,
**caractérisé en ce que**
des obstacles extérieurs sont reconnus par le dispositif d'usinage et un système de capteur de reconnaissance est réalisé pour reconnaître des obstacles dans une zone de déplacement directe du portique de déplacement et/ou du système robotisé.

8. Procédé selon l'une quelconque des revendications précédentes,
**caractérisé en ce que**
le composant de grande taille est maintenu dans le système de rotation, relié de manière commandée au dispositif d'usinage, du portique de maintien, dans lequel un contour (CONTOUR), le long duquel l'outil d'usinage est guidé, comprend un réseau de points avec des points de rotation associés en périphérie à la surface profilée, sur lesquels l'outil d'usinage est placé après une rotation du composant de grande taille et avant un train d'usinage.

9. Procédé selon l'une quelconque des revendications précédentes,
**caractérisé en ce que**
un déplacement d'avance du portique de déplacement et/ou un déplacement de positionnement de l'outil d'usinage sont exécutés en corrigeant l'exécution d'un algorithme d'apprentissage.

10. Procédé selon l'une quelconque des revendications précédentes,
**caractérisé en ce que**
un paramètre de commande de l'outil d'usinage est une vitesse en périphérie de celui-ci, dans lequel un suivi de la vitesse en périphérie est effectué de telle manière que celle-ci est sensiblement égale dans le premier et dans le deuxième train d'usinage.

11. Procédé selon l'une quelconque des revendications précédentes,
**caractérisé en ce que**
une distance et/ou une pression et/ou un autre paramètre de commande de l'outil d'usinage concernant le composant de grande taille profilé sont régulés pendant un train d'usinage.

12. Dispositif d'usinage d'usinage de surface automatisé d'un composant de grande taille profilé d'une éolienne, avec un portique de déplacement, un système robotisé avec un système de commande et un outil d'usinage d'une tête de travail, dans lequel
- le portique de déplacement est formé en tant qu'un chariot de déplacement (4), qui peut être déplacé le long d'une surface profilée du composant profilé ;
- le système robotisé comprend un système de positionnement robotisé pouvant être actionné entre le chariot de déplacement (4) et l'outil d'usinage, au moyen duquel l'outil d'usinage peut être positionné sensiblement de manière transversale par rapport à la surface profilée du composant profilé, et
- l'outil d'usinage est réalisé pour le traitement à plat du composant de grande taille, dans lequel
- le système de commande est réalisé pour exécuter un déplacement d'avance du chariot de déplacement (4) et un déplacement de positionnement du système de positionnement robotisé selon une spécification d'un modèle (MODELE) virtuel de la surface profilée du composant profilé, dans lequel au moins un contour (CONTOUR) de la surface profilée est enregistré dans le système de commande, qui est formé selon un modèle (MODELE) virtuel de la surface profilée du composant profilé et le contour (CONTOUR) peut être déterminé par le système de commande et l'outil d'usinage peut être guidé le long du contour (CONTOUR), dans lequel
- un nombre de trains de traitement à plat peut être mis en œuvre au niveau du composant de grande taille, et
**caractérisé par**
- un système de rotation, relié de manière commandée au dispositif de traitement, d'un portique de maintien servant à maintenir de manière à pouvoir tourner le composant de grande taille profilé d'une éolienne, dans lequel
- le chariot de déplacement (4) peut être déplacé dans une zone de travail sans limitation mécanique le long de la surface profilée du composant profilé,
- le contour (CONTOUR), le long duquel l'outil d'usinage peut être guidé, comprend un réseau de points avec des points d'inversion associés côté longitudinal à la surface profilée et se faisant face pour un train d'usinage de l'outil d'usinage, et
- une usure de l'outil d'usinage entre un premier et un deuxième train d'usinage peut être vérifiée.
